# EUROPÄISCHE PATENTSCHRIFT

(11) **EP 0 603 179 B1**
(45) Veröffentlichungstag und Bekanntmachung des Hinweises auf die Patenterteilung: **18.09.1996**
(21) Anmeldenummer: 92907859.0
(22) Anmeldetag: 08.04.1992
(51) Int. Cl.: B29C 33/30, B29C 49/48

(54) **BLASFORMMASCHINE**
BLOW-MOULDING MACHINE
MACHINE DE MOULAGE PAR SOUFFLAGE

(30) Priorität: 14.09.1991 DE 4130717
(43) Veröffentlichungstag der Anmeldung: 29.06.1994
(73) Patentinhaber: MAUSER-WERKE GmbH, D-50321 Brühl (DE)
(72) Erfinder: PRZYTULLA, Dietmar, D-5014 Kerpen (DE)
(86) Internationale Anmeldenummer: EP9200800
(87) Internationale Veröffentlichungsnummer: WO9305942

(56) Entgegenhaltungen:
- EP-A- 0 297 196
- US-A- 3 809 356
- US-A- 4 151 976

## Beschreibung

Die Erfindung betrifft eine Blasformmaschine zur Herstellung blasgeformter großvolumiger Fässer mit angestauchtem Ringflansch aus thermoplatischem Kunststoff sowie ein entsprechendes Herstellungsverfahren.
Üblicherweise wird verfahrenstechnisch dazu aus der Ringspaltdüse eines Kopfspeichers ein schlauchförmiger Vorformling aus thermoplatischem Kunststoff zwischen die geöffneten Hälften einer entsprechenden Blasform extrudiert, danach werden die Blasformhälften zugefahren, der Vorformling wird oben und unten zwischen den Blasformhälften ein- bzw. abgequetscht und mittels eingeblasener Druckluft zu einem Hohlkörper mit einer der Innenkontur der jeweiligen Blasform entsprechenden Außenform - z. B. ein großvolumiges Kunststoff-Faß - aufgeblasen.
Vorrichtungsmäßig sind hierfür Blasformen bekannt, in welchen z.B. geschlossene Spundfässer mit zwei Spundlöchern im Oberboden und mit im Nahbereich von Oberboden oder/und Unterboden angeordneten Flanschringen (Trage- und Transportringe bzw. Handlingsringe oder Umfangs-Rollringe) hergestellt werden können. Die dabei angewandte Technik des Anstauchens von umlaufenden Flanschringen mittels axial verschiebbarer Formschieber ist dem Fachmann gleichfalls allgemein bekannt.

Weiterhin sind Blasformen bekannt, in welchen der Faßkörper für Deckelfässer (Weithalsgebinde) ausgeblasen wird. Diese Blasformen weisen ebenfalls einen Formschieber zum Anstauchen eines umlaufenden Mantelflansches als Gegenlager für einen den Außenflansch des Faßdeckels gleichfalls übergreifenden Spannring am oberen Faßrand nahe an der durchmessergroßen Faßöffnung auf. Derartige Blasformen mit einem fest eingebauten ringförmigen Formschieber haben sich bei der Faßherstellung bewährt und werden in vielen Ländern der Welt zur Herstellung von qualitativ guten Kunststoff-Fässern mit aus der Faßwandung ausgeformten bzw. angestauchten Flanschringen eingesetzt.

Will nun ein Faßhersteller seine Blasformmaschine mit einer Blasform für einen Faßtyp, z. B. ein Spundfaß, auf die Herstellung eines anderen Faßtyps, z. B. ein Deckelfaß, umrüsten, so benötigt er hierfür zunächst die entsprechende zweite Blasform. Von diesen kapitalintensiven Werkzeugen (Blasformen) kann also jeweils immer nur eine Form für die jeweilige Faßherstellung eingesetzt werden, während die andere Blasform ungenutzt auf Lager liegt. Beim Umrüsten bzw. beim Wechsel von einem Faßtyp auf einen anderen Faßtyp muß bisher die erste Blasform sowie der entsprechende Blasdorn ausgebaut und die zweite Blasform sowie der dazugehörige passende Blasdorn eingebaut und eingerichtet werden. Zusätzlich muß auch der funktionelle Ablauf bzw. die Steuerung der Blasformanlage auf den anderen Faßtyp umgestellt bzw. umgerüstet werden. Dieser Vorgang bedingt einen Maschinenstillstand von mehreren Stunden mit entsprechendem Produktionsausfall.
Die Druckschrift EP-A- 0 297 196 offenbart eine einfache Form zur Herstellung von kleineren Plastikbehältern, wie z. B. Flaschen mit unterschiedlichen Mundstücken und unterschiedlichen Behälterhöhen. Zur Veränderung der Behälterhöhe bzw. des Behältervolumens wird die Form unten durch Einsetzen eines Verlängerungs-Ringstückes entsprechend verlängert. Durch Verwendung verschieden langer Ringstückeinsätze können unter Beibehaltung der Grundkonfiguration des Behälters entsprechende Behälter mit unterschiedlicher Behälterhöhe bzw. Behältervolumen hergestellt werden. Zur Erzeugung von verschiedenen Flaschenmundstücken kann ein oberes Ringstück der Form ausgewechselt werden; dadurch können jeweils Flaschen bzw. Behälter mit unterschiedlichen Gewinden für entsprechene Schraubverschlüsse hergestellt werden. Grundsätzlich handelt es sich bei den in dieser veränderbaren Form herstellbaren Behältern aber immer um den gleichen Behältertyp.
Konkrete Hinweise auf die besondere Ausgestaltung der erfinderungsgemäßen Wechselblasform zur Herstellung von geschlossenen Spundfässern mit oberem Trage- und Transportring oder von Deckelfaßkörpern mit umlaufendem angestauchtem Mantelflanschring am oberen Faßöffnungsrand als Gegenlager zur Befestigung eines entsprechenden Faßdeckels mittels aufgesetztem Spannringverschluß sind aus dieser Veröffentlichung an keiner Stelle zu entnehmen. Im übrigen handelt es sich bei der bekannten Form zur Herstellung der besagten Behälter nicht um eine geteilte aus zwei horizontal verfahrbaren Blasformhälften bestehende Blasform, die zur Blasformgebung von großvolumigen Behältern üblich ist und bei der ein von oben zwischen die geöffneten Blasformhälften extrudierter Kunststoff-Schlauch von den zufahrenden Blasformhälften oben und unten abgequetscht und mittels eingeblasener Preßluft auf die Innenkontur des Blasformhohlraumes aufgeblasen wird, sondern vielmehr um eine einfache einteilige Preßform bzw. Druckform (printing form with press parts), die offensichtlich zur Herstellung von Kleinbehältern wie Flaschen verwendet werden kann.

Es ist Aufgabe der vorliegenden Erfindung, dem Faßhersteller eine Blasformmaschine mit neuer Blasform zur Verfügung zu stellen, mittels derer die Blasformmaschine in kürzerer Zeit als bisher von einem ersten Faßtyp auf einen anderen zweiten Faßtyp umgerüstet werden kann.
Diese Aufgabe wird nun erfindungsgemäß dadurch gelöst, daß die Blasform als Grundform zur Herstellung eines ersten Faßtyps, nämlich eines Spundfasses mit Diese Aufgabe wird nun erfindungsgemäß dadurch gelöst, daß die Blasform als Grundform zur Herstellung eines ersten Faßtyps, nämlich eines Spundfasses mit umlaufendem Trage- und Transportring im Umfangsbereich des Faßbodens und mit wenigstens einer Spundöffnung im Faßoberboden ausgebildet ist, wobei die Blasform oder/und der Formschieber zum Anstauchen des Trage- und Transportringes aus dem Material der Faßwandung mit einem austauschbaren ersten Ringteilsatz mit der Kontur des Trage- und Transportringes ausgestattet ist, und zur schnellen Umrüstung von dem ersten Faßtyp, nämlich dem Spundfaß, auf einen anderen zweiten Faßtyp, nämlich einen Deckelfaßkörper, mittels des entsprechenden, in die Blasform einsetzbaren und innerhalb der Blasform befestigbaren, austauschbaren Ringteilsatzes auf die Faßform des anderen zweiten Faßtyps, nämlich des Deckelfaßkörpers mit umlaufendem Mantelflansch im Umfangbereich an der oberen Faßmündung umrüstbar ist, wobei der austauschbare zweite Ringteilsatz die Kontur des massiven Mantelflansches am Deckelfaßkörper vorgibt bzw. diesem entspricht.
In vorteilhafter Weise ist der Ringteilsatz zur Umrüstung z. B. von einem Spundfaß auf einen Deckelfaßkörper- oder umgekehrt- austauschbar, ohne daR die Blasform bzw. der Formschieber aus der Blasformmaschine auszubauen ist. Dies wird zweckmäßigerweise dadurch erreicht, daß die Befestigungsmittel, vorzugsweise Gewindeschrauben, zur Befestigung des Ringteilsatzes an der Blasform bzw. an dem Formschieber von außen bzw. von unten zugänglich und manipulierbar sind. Beim Umrüsten werden die Blasdorne nicht gewechselt und die Blasformanlage wird verfahrenstechnisch nicht auf einen anderen Typ umgestellt. Zur Herstellung eines Spundfasses mit umlaufendem Trage- und Transportring im Umfangsbereich des Faßoberbodens, in dem wenigstens eine, vorzugsweise zwei Spundlochöffnungen ausgebildet sind, ist die Blasform am Formschieber oder/und an dem entsprechenden dazugehörigen festehenden Blasformteil zum Anstauchen des Trage- und Transportringes mit einem austauschbaren Ringteilsatz mit der Kontur des Trage- und Transportringes ausgestattet. Ein derartiger Trage- und Transportring, der es erstmalig ermöglicht, daß ein Kunststoff-Spundfaß mit dem gleichen Faßgreiferwerkzeug (Papageienschnabel) handhabbar ist wie ein herkömmliches Spundfaß aus Stahlblech, ist z. B. aus der EP-A-0 324 882 bekannt. Zur Herstellung eines Deckelfaßkörpers für das sogenannte und weltweit bekannte "Standard-Deckelfaß", wie es aus der DE-PS 25 44 491 bekannt ist und bei dem der massive Mantelflansch in einem gewissen Abstand von ca. 40 mm unterhalb der Faßmündung auf der Faßaußenwandung angestaucht ist, wird lediglich der Ringteilsatz des Trage- und Transportringes des Spundfasses ausgetauscht und der Ringteilsatz für den Deckelfaßkörper eingesetzt, welcher die Kontur des massiven Mantelflansches vorgibt bzw. diesem entspricht.
In vorteilhafter Weise besteht der Ringteilsatz für den Trage- und Transportring des Spundfasses bzw. der Ringteilsatz für den Mantelflansch des Deckelfaßkörpers aus wenigstens zwei umlaufenden Ringstücken, wobei das eine Ringstück als Konturring am feststehenden Blasformteil und das andere Ringstück als Quetschring am Formschieber auswechselbar befestigt ist. Somit können durch einfaches Austauschen des Ringteilsatzes - diese Arbeit benötigt nur einige Minuten - in einer einzigen Blasform zwei völlig verschiedene Typen (Gattungen) von Kunststoff-Fässern hergestellt werden. Und dabei ist nicht einmal eine Programmänderung der Maschinensteuerung oder ein Umbau bzw. ein Auswechseln der Blasdorne erforderlich, da der bzw. die beiden Blasdorne (zur Ausbildung der Spundlochstutzen im Oberboden des Spundfasses) immer fest eingebaut bleiben und bei der Deckelfaßkörper-Herstellung mitbenutzt werden. Bei der Herstellung des Deckelfaßkörpers weist also das Abfallstück (mit Butzen), das aus der Deckelfaßöffnung herausgeschnitten wird, die Form des Spundfaßoberbodens mit Spundöffnungen auf. Das Abfallstück wird zerkleinert und direkt wieder als Rohmaterial in den Extruder zurückgeführt.

In Ausgestaltung der Erfindung ist vorgesehen, daß die Blasform als Grundform einen zweiten Formschieber zum Anstauchen eines zweiten umlaufenden Umfangsringes als Bodenrollring am Übergangsbereich von unterer Faßwandung in den Faßunterboden aufweist. Hiermit können also Spundfässer mit oberem und unterem Trage- und Transportring oder Deckelfässer mit unterem Bodenrollring hergestellt werden. Wenn ein Kunde z.B. Spundfässer oder Deckelfässer ohne den unteren Bodenrollring geliefert haben möchte, so laßt sich der Ringeinsatz zum Anstauchen des Bodenrollringes durch einen Blind-Ringeinsatz mit einer dem Faßboden entsprechenden glatten Innenkontur ersetzen. Dann bleibt der Formschieber für den Bodenrollring außer Betrieb und es können ebenso einfach Kunststoff-Fässer ohne Bodenrollring hergestellt werden.

In weiterer Ausgestaltung der Erfindung ist vorgesehen, daß die Blasform im Bereich zur Ausbildung der unteren Faßwandung einen weiteren Blasformeinsatz aufweist, der in Querschnittsbetrachtung keilförmig bzw. dreiecksförmig ausgebildet ist, wobei die breite Seite des Einsatzes zum Faßunterboden und die schmale spitze Seite des Einsatzes zur Faßmündung des Deckelfaßkörpers ausgerichtet ist. Mit diesem weiteren Blasformeinsatz zur Herstellung konischer Deckelfaßkörper läßt sich das Spektrum der in ein und derselben Blasform herstellbaren möglichen Faßtypen noch erweitern.

Die Erfindung wird nachfolgend anhand von in den Zeichnungen schematisch dargestellten Ausführungsbeispielen näher erläutert und beschrieben. Es zeigen:
- Figur 1: eine Blasformmaschine mit üblicher Blasform für ein Deckelfaß,
- Figur 2: eine Blasform mit Formschiebern für ein bekanntes Spundfaß,
- Figur 3: ausschnittsweise den unteren rechten Teil einer erfindungsgemäßen Blasform für ein Spundfaß mit Trage- und Transportring in geöffnetem Zustand des Formschiebers,
- Figur 4: die Blasform aus Fig. 3 in zugefahrenem Zustand des Formschiebers,
- Figur 5: die Blasform aus Fig. 3 in abgewandelter Ausführung für ein Deckelfaß in geöffnetem Zustand des Formschiebers,
- Figur 6: die Blasform aus Fig. 5 in zugefahrenem Zustand des Formschiebers,
- Figur 7: in Teildarstellung ein in der erfindungsgemäßen Blasform hergestelltes Spundfaß (linke Hälfte) und ein Deckelfaß (rechte Hälfte) und
- Figur 8: eine abgeänderte konische Deckelfaßausführung.

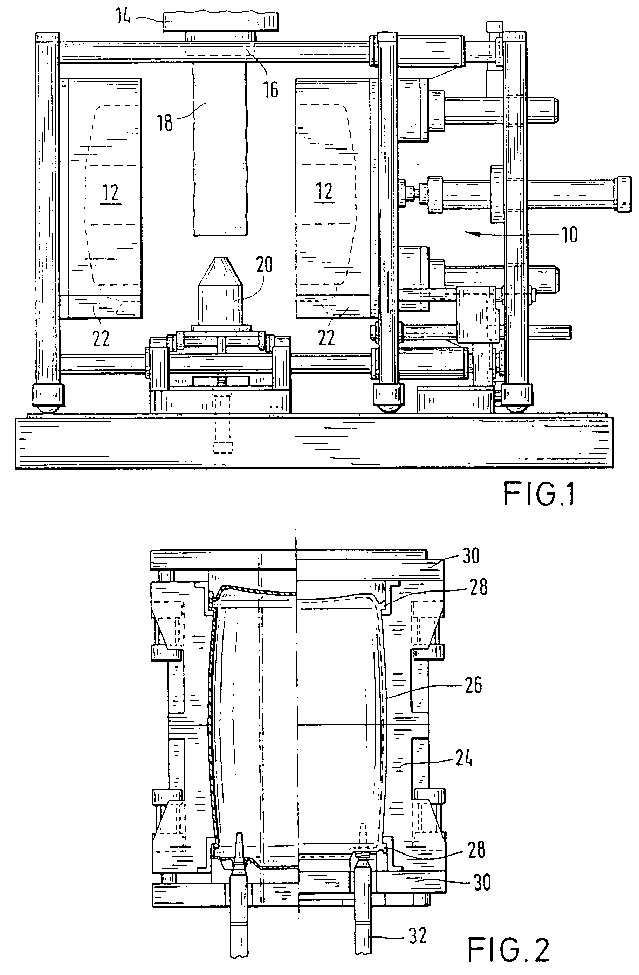

In Figur 1 ist mit der Bezugsziffer 10 eine Blasformmaschine (gemäß Stand der Technik) mit horizontal verschiebbaren, auf Formaufspannplatten aufgespannten Formhälften 12 für ein Deckelfaß bezeichnet und oberhalb der Blasformhälften 12 ist ein Speicherkopf 14 mit einer Ringdüse 16 erkennbar, aus welcher ein schlauchförmiger Vorformling 18 zwischen die geöffneten Blasformhälften 12 extrudiert wird. Der Vorformling 18 wird unten über den vergleichsweise großdimensionierten Blasdorn 20 gestülpt, zwischen den zufahrenden Blasformhälften 12 eingequetscht und mittels durch den Blasdorn eingeblasener Druckluft auf die der Innenkontur der Blasform entsprechende Form des Deckelfaßkörpers aufgeblasen.
Die Mündung bzw. Faßöffnung des Deckelfaßkörpers befindet sich beim Herstellvorgang unten in der Blasform auf der Seite des Blasdornes 20; dort ist auch der Formschieber 22 zum Anstauchen des Mantelflansches aus dem Material der Faßwandung des Faßkörpers angeordnet.

In Figur 2 ist zur Verdeutlichung eine Blasform 24 (gemäß Stand der Technik) für ein bekanntes Spundfaß 26 mit oberem und unterem Trage- und Transportring 28 bzw. Handlingsring gezeigt. Zum Anstauchen der Umfangsringe 28 ist die Blasform 24 mit einem oberen und einem unteren Formschieber 30 ausgestattet. Auch das Spundfaß 26 wird in der üblichen Überkopf-Position in der Blasform 24 hergestellt, wobei die beiden Spundstutzen im Oberboden des Spundfasses 26 um die beiden Blasdorne 32 ausgebildet und ausgeformt werden. Die Formschieber 30 sind in der linken Bildhälfte in geöffnetem Zustand - der Vorformling ist hier bereits aufgeblasen - und in der rechten Bildhälfte in geschlossenem Zustand dargestellt; die Trage- und Transportringe 28 sind hier bereits massiv angestaucht und in sich verschweißt.

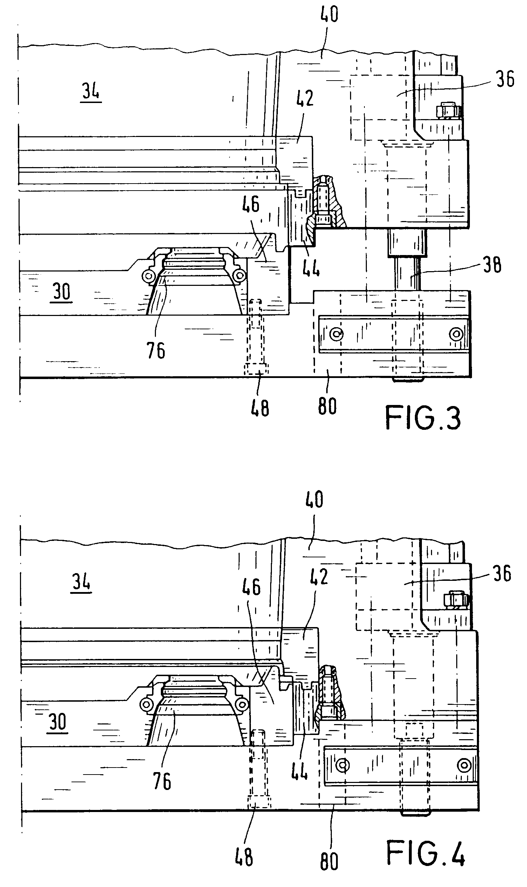

In Figur 3 ist der rechte untere Teil einer erfindungsgemäßen Blasform (Hälfte) 34 mit Formschieber 30 für ein Spundfaß mit Trage- und Transportring im Längsschnitt dargestellt.
Der Formschieber 30 mit integriertem Gewindeeinsatz 76 ist mittels eines Hydraulikantriebes 36 bzw. über Hubstangen 38 in Axialrichtung verschiebbar, wobei der Hubweg beispielsweise bei einem 220 l-Spundfaß ca. 45 mm beträgt.

Der obere Teil 40 der Blasform 34 ist mit einem Konturring 42 ausgestattet, der mittels eines Halteringes 44 am Blasformteil 40 verschraubt ist. Dazu korrespondierend ist auf dem axial verschiebbaren Formschieber 30 ein Quetschring 46 befestigt. Als Befestigungsmittel dienen vorzugsweise von außen bzw. unten frei zugängliche Gewindeschrauben 48, die ein einfaches Auswechseln der Ringeinsätze 42,44,46 ohne Demontage des Formschiebers oder der gesamten Blasform ermöglichen. Hierfür sind z.B. Durchgangslöcher 80 im Formschieber 30 vorgesehen. Der Konturring 42 und der Haltering 44 könnten selbstverständlich auch als einziges Ringeinsatzteil ausgebildet sein. In Fig. 3 ist der Formschieber 30 mit Gewindeeinsatz 76 und Quetschring 46 nach unten in die geöffnete Position gefahren. Der schlauchförmige Vorformling wird in den Ringraum zwischen Konturring 42/Haltering 44 und Quetschring 46 ausgeblasen.

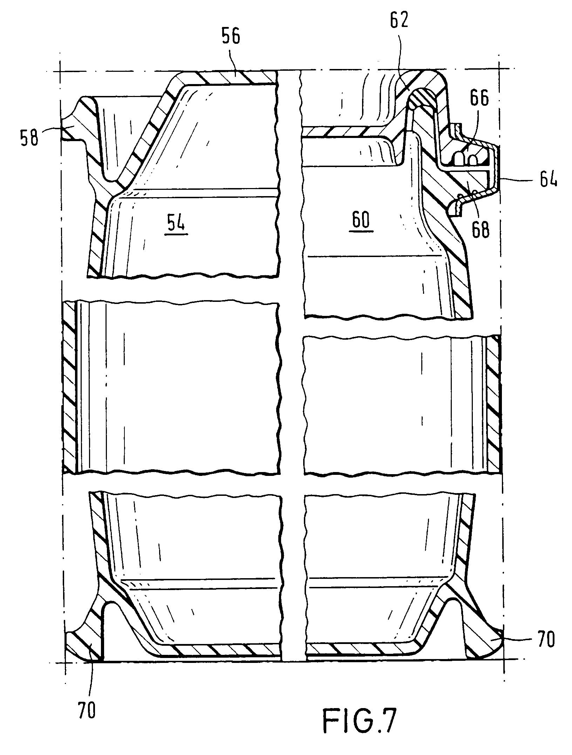

In Figur 4 ist der Formschieber 30 zugefahren und das Kunststoffmaterial in dem Ringraum zwischen Konturring 42/Haltering 44 und Quetschring 46 ist zu einem massiven Trage- und Transportring der bekannten vorteilhaften Ausgestaltungsform angestaucht und verschweißt worden (siehe Fig. 7 links oben).

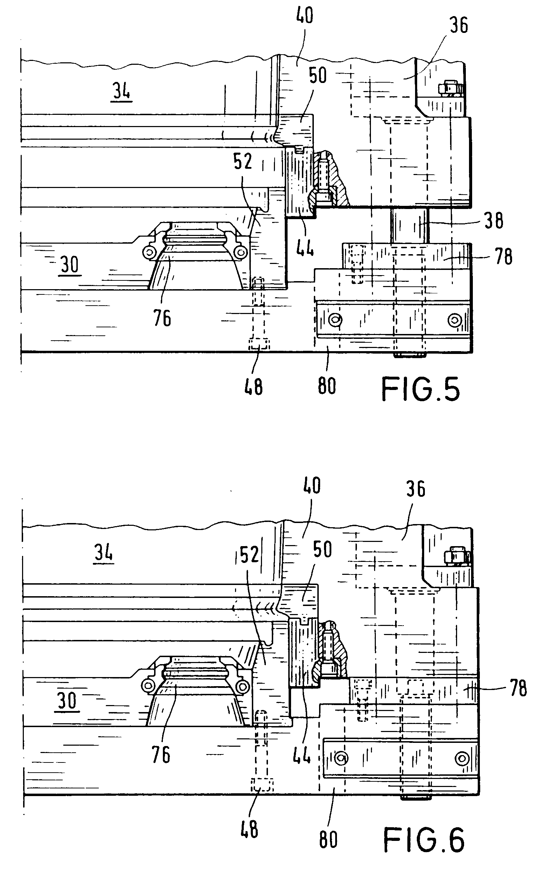

Figur 5 zeigt die Grundform der Blasform 34 in umgerüstetem Zustand für einen Deckelfaßkörper.
Konturring 42 und Quetschring 46 für das Spundfaß sind ausgebaut und Konturring 50 und Quetschring 52 mit der Kontur des Mantelflansches und der Faßmündung des Deckelfaßkörpers sind eingebaut. Der Formschieber 30 steht in geöffneter Position und der schlauchförmige Vorformling kann in den freien Ringraum - begrenzt durch Konturring 50, Haltering 44 und Quetschring 52 - ausgeblasen werden.
In Figur 6 ist der Formschieber 30 geschlossen und das Kunststoffmaterial im freien Ringraum ist zu einem massiven Mantelflansch zusammengestaucht und verschweißt (siehe Fig. 7 rechts oben).
In der dargestellten Ausführungsform gleitet der Quetschring 52 (46) bei Schiebebewegungen des Formschiebers mit seiner zylindrischen Außenwandung auf der korrespondierenden zylindrischen Innenwandung des Halteringes 44. Bei Abnutzung der Gleitflächen nach langer Betriebszeit braucht lediglich ein neuer Haltering 44 mit verkleinertem bzw. angepaßtem Innendurchmesser als Verschleißteil eingesetzt zu werden. Für eine Veränderung bzw. Verringerung des Formschieberhubes werden entsprechende Distanzstücke 78 eingesetzt.
Die mit der Kombi-Blasform herstellbaren Faßtypen unterschiedlicher Gattung sind in Teilstücken in Figur 7 dargestellt. Die linke Bildhälfte zeigt ein Spundfaß 54 mit wenigstens einem Spundlochstutzen (nicht dargestellt) im geschlossenen Spundfaß-Oberboden 56 und mit einem oberen in nahezu axialer Verlängerung der Faßwandung ausgerichteten Trage- und Transportring 58 als ersten Faßtyp. In der rechten Bildhälfte ist ein Standard-Deckelfaß mit Deckelfaßkörper 60, Faßdeckel 62 (mit eingelegter Dichtung) und Spannring 64 dargestellt. Der U-förmige Spannring 64 übergreift einen radial nach außen abstehenden Deckelflansch 66 und untergreift den aus der Faßwandung angestauchten ebenfalls radial nach außen abstehenden massiven Mantelflansch 68, wobei die Dichtung auf die Faßoberkante gepreßt wird und das Deckelfaß gas- und flüssigkeitsdicht verschlossen ist. Bei Bedarf kann auch der Faßdeckel 62 mit einem oder zwei Spundstutzen ausgestattet sein.
Der untere Teil der Faßkörper des Spundfasses und des Deckelfaßkörpers sind identisch mit nahezu zylindrischem Mittelteil und unterem Bodenrollring 70 zum besseren Abrollen eines gefüllten Fasses in Schrägposition.

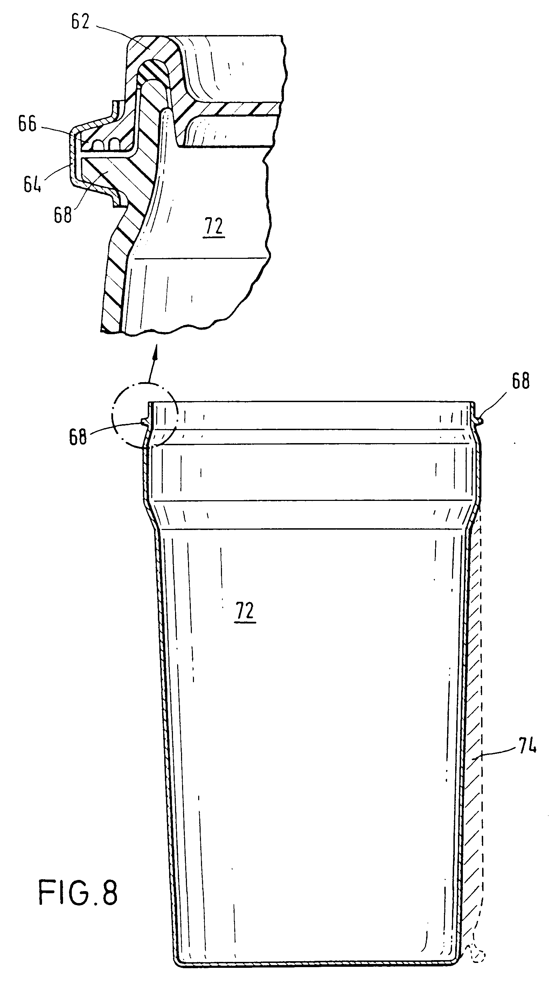

In Figur 8 ist schließlich eine weitere Produktvariante dargestellt, die mittels eines weiteren Blasformeinsatzes 74 in der Kombi-Blasform herstellbar ist.
Der lediglich gestrichelt schematisch angedeutete Blasformeinsatz 74 besteht im wesentlichen aus zwei Halbschalen, deren Innenkontur der Außenkontur des konischen Deckelfaßkörpers 72 und deren Außenkontur im wesentlichen der Innenkontur der Blasform 34 (Grundform) bzw. der Außenkontur des Deckelfaßkörpers 60 entspricht. Bei den in Fig. 8 dargestellten komischen Deckelfaßkörpern 72 - die im Leerzustand ineinanderstapelbar sind - entspricht also im wesentlichen nur noch der obere Faßmündungsbereich mit Mantelflansch 68 (wie vergrößert herausgezeichnet ist) dem Faßkörper des in Fig. 7 (rechte Rildhälfte) dargestellten zylindrischen Deckelfaßkörpers 60. Die Fixierung des komischen Blasformeinsatzes 74 kann auf einfache Weise erfolgen: Außen unten an dem Blasformeinsatz ist ein umlaufender Vorsprung ausgebildet, der exakt der Form des Bodenrollringes 70 entspricht. Die Hälften des Blasformeinsatzes werden mit den Vorsprüngen in die Bodenrollring-Ausnehmung gesteckt und der Bodenrollring-Formschieber wird zugefahren und hält den komischen Einsatz unverrückbar fest. Gegebenenfalls kann oben ein weiteres zusätzliches Befestigungsmittel (Halteschraube) vorgesehen sein.

Der Umbau von der Spundfaß-Blasform zur Deckelfaß-Blasform ist also mit äußerst geringem Aufwand durchzuführen:
Quetschring 46 und Konturring 42 (44) werden ausgebaut, Quetschring 52 und Konturring 50 (44) werden eingebaut. Zusätzlich kann ein Distanzstück 78 zur Hubreduzierung eingebaut werden. Der Formschieber 30 und Blasdorn 32 der Spundausführung bleiben unverändert; auch die Ablaufsteuerung der Blasformanlage wird nicht verändert.
Für die Fertigung von Spundfässern ohne oberen Handlingsring könnten anstelle der Quetsch-/Konturringe entsprechende Blindeinsätze eingebaut werden. Nach dem gleichen Schema können auch die Konturen im Unterboden-Bereich gewechselt oder im Ober- und Unterboden-Bereich gleichzeitig gewechselt werden.

Aus dem Stand der Technik sind zwar mehrteilige Blasformen für Kleinbehälter (z.B. Kofferkästen oder Flaschen) bekannt, bei denen zur Änderung des Behältervolumens oder eines besonderen Designs (Flaschendekor) bestimmte Formteile austauschbar sind. Hierbei erfolgt jedoch keine grundsätzliche Änderung des Produktes, sondern wie gesagt lediglich eine Änderung der Koffergröße oder der Flaschen(teil)oberfläche. Bei der vorliegenden Erfindung können in einer einzigen Blasform zwei gattungsmäßig sich vollständig unterscheidende großvolumige Faßtypen hergestellt werden.
Der Faßhersteller kann also mit einfachen schnellen Umrüstmaßnahmen seine Blasformmaschine bzw. Blasform auf unterschiedliche Kundenwünsche bzw. Produktformen umstellen.

## Patentansprüche

1. Blasformmaschine zur Herstellung blasgeformter großvolumiger Fässer mit angestauchtem Ringflansch (58,68) aus thermoplastischem Kunststoff, mit einer aus zwei horizontal verfahrbaren Blasformhälften bestehenden Blasform (34), in welche ein schlauchförmiger Vorformling extrudiert und auf die Kontur des Faßkörpers aufgeblasen wird, wobei in der Blasform (34) gleichzeitig mittels eines Formschiebers (30) der Ringflansch (58,68) angestaucht wird, wobei die Blasform (34) als Grundform zur Herstellung eines ersten Faßtyps, nämlich eines Spundfasses (26,54) mit umlaufendem Trage- und Transportring (58) im Umfangsbereich des Faßbodens (56) und mit wenigstens einer Spundlochöffnung im Faßoberboden (56) ausgebildet ist, wobei die Blasform (34) oder/und der Formschieber (30) zum Anstauchen des Trage- und Transportringes (58) aus dem Material der Faßwandung mit einem austauschbaren ersten Ringteilsatz (42,44,46) mit der Kontur des Trage- und Transportringes (58) ausgestattet ist, und zur schnellen Umrüstung von dem ersten Faßtyp, nämlich dem Spundfaß (26,54), auf einen anderen zweiten Faßtyp, nämlich einen Deckelfaßkörper (60), mittels des entsprechenden, in die Blasform (34) einsetzbaren und innerhalb der Blasform (34) befestigbaren, austauschbaren Ringteilsatzes (42,44,46; 50,44,46) auf die Faßform des anderen zweiten Faßtyps, nämlich des Deckelfaßkörpers (60) mit umlaufendem Mantelflansch (68) im Umfangsbereich an der oberen Faßmündung umrüstbar ist, wobei der austauschbare zweite Ringteilsatz (50,44,52) die Kontur des massiven Mantelflansches (68) am Deckelfaßkörper (60) vorgibt bzw. diesem entspricht.

2. Blasformmaschine nach Anspruch 1,
**dadurch gekennzeichnet**, daß
der Ringteilsatz (42,44,46; 50,44,46) austauschbar ist, ohne daß die Blasform (34) bzw. der Formschieber (30) aus der Blasformmaschine (10) auszubauen ist.

3. Blasformmaschine nach Anspruch 1 oder 2,
**dadurch gekennzeichnet**, daß
die Befestigungsmittel, vorzugsweise Gewindeschrauben (48), zur Befestigung des Ringteilsatzes (42,44,46; 50,44,46) an der Blasform (34) bzw. an dem Formschieber (30) von außen bzw. unten zugänglich, d.h. manipulierbar sind.

4. Blasformmaschine nach Anspruch 1, 2 oder 3,
**dadurch gekennzeichnet**, daß
der Ringteilsatz (42,44,46) für den Trage- und Transportring (58) des Spundfasses (54) bzw. der Ringteilsatz (50,44,52) für den Mantelflansch (68) des Deckelfaßkörpers (60) aus wenigstens zwei umlaufenden Ringstücken besteht, wobei das eine Ringstück als Konturring (42,50) am feststehenden Blasformteil (40) und das andere Ringstück als Quetschring (46,52) am Formschieber (30) auswechselbar befestigt ist.

5. Blasformmaschine nach Anspruch 1, 2, 3 oder 4,
**dadurch gekennzeichnet**, daß
die Blasform (34) als Grundform einen zweiten Formschieber (30') zum Anstauchen eines zweiten umlaufenden Umfangsringes als Bodenrollring (70) am Übergangsbereich von unterer Faßwandung in den Faßunterboden aufweist.

6. Blasformmaschine nach einem der vorhergehenden Ansprüche 1 bis 5,
**dadurch gekennzeichnet**, daß
zur Herstellung eines konischen Deckelfaßkörpers (72) in die Blasform (34) im Bereich der unteren Faßwandung ein weiterer halbschalenförmiger Blasformeinsatz (74) eingesetzt ist, der in Querschnittsbetrachtung etwa keilförmig ausgebildet ist, wobei die breitere Seite des Einsatzes (74) zum Faßunterboden und die schmalere spitze Seite des Einsatzes (74) zur Faßmündung des Deckelfaßkörpers (72) ausgerichtet ist.

7. Blasformmaschine nach einem der vorhergehenden Ansprüche 1 bis 6,
**dadurch gekennzeichnet**, daß
zur Veränderung bzw. Verringerung des Formschieberhubes ein auswechselbares Distanzstück (78) zwischen Formschieber (30) und feststehendem Blasformteil (40) befestigbar ist.

8. Verfahren zur Herstellung blasgeformter Hohlkörper mit angestauchten Flanschringen, insbesondere großvolumige Fässer, aus thermoplastischem Kunststoff auf einer Blasformmaschine, bei der in einer Blasform als Grundform mit Formschieber ein erster Faßtyp mit am oberen Faßbereich angestauchtem Mantelflansch herstellbar ist, und bei der durch Austausch eines auswechselbaren Ringteilsatzes die eingebaute Blasform derart umgerüstet wird, daß ein völlig anderer zweiter Faßtyp mit am Faßkörperbereich angestauchtem Mantelflansch herstellbar ist.

9. Verfahren nach Anspruch 8,
**dadurch gekennzeichnet**, daß
in der Blasform als erster Faßtyp ein geschlossenes Spundfaß mit wenigstens einer Spundlochöffnung im Faßoberboden und mit oberem oder/und unterem Trage- und Transportring und als zweiter Faßtyp ein Deckelfaßkörper mit am oberen Faßbereich bzw. im Nahbereich der Faßöffnung angeordnetem massivem Mantelflansch als Auflager für den Faßdeckel bzw. als Gegenlager für einen Spannringverschluß erblasen wird.

## Claims

1. A blow moulding machine for manufacturing blow moulded large-volume vessels having an upset ring flange (58, 68), from thermoplastic synthetic material, having a blow mould (34) comprising two horizontally displaceable blow mould halves into which a tubular parison is extruded and is blown onto the contour of the vessel body, the ring flange (58, 68) being upset in the blow mould (34) at the same time by means of a mould slide (30), the blow mould (34) being constructed as a basic mould for the manufacture of a first vessel type, namely a plugged vessel (26, 54) having a peripheral carrying and transport ring (58) in the peripheral region of the vessel surface (56) and having at least one plug hole opening in the vessel upper surface (56), the blow mould (34) and/or the mould slide (30) being equipped, for upsetting the carrying and transport ring (58) from material of the vessel wall, with an exchangeable first ring part set (42, 44, 46) having the contour of the carrying and transport ring (58), and for the rapid change-over from the first vessel type, namely the plugged vessel (26, 54), to another second vessel type, namely a removable-cover vessel body (60), by means of the corresponding exchangeable ring part set (42, 44, 46; 50, 44, 46) which can be inserted into the blow mould (34) and can be secured within the blow mould (34), can be changed over to the vessel shape of the other second vessel type, namely the removable-cover vessel body (60) having a peripheral casing flange (68) in the peripheral region at the upper vessel orifice, the exchangeable second ring part set (50, 44, 52) predetermining the contour of the solid casing flange (68) on the removable-cover vessel body (60), and corresponding thereto.

2. A blow moulding machine according to Claim 1, characterized in that the ring part set (42, 44, 46; 50, 44, 46) may be exchanged without the blow mould (34) or the mould slide (30) having to be removed from the blow moulding machine (10).

3. A blow moulding machine according to Claim 1 or 2, characterized in that the securing means, preferably threaded screws (48), for securing the ring part set (42, 44, 46; 50, 44, 46) to the blow mould (34) or to the mould slide (30) are accessible from the outside or from below, that is to say are manipulable.

4. A blow moulding machine according to Claim 1, 2 or 3, characterized in that the ring part set (42, 44, 46) for the carrying and transport ring (58) of the plugged vessel (54) or the ring part set (50, 44, 52) for the casing flange (68) of the removable-cover vessel body (60) comprises at least two peripheral ring pieces, with one ring piece as a contour ring (42, 50) being secured on the fixed blow moulded part (40) and the other ring piece as a pinch ring (46, 52) being removably secured on the mould slide (30).

5. A blow moulding machine according to Claim 1, 2, 3 or 4, characterized in that the blow mould (34) has as the basic mould a second mould slide (30') for upsetting a second peripheral ring as the surface roll ring (70) at the transition region from the lower vessel wall to the vessel lower surface.

6. A blow moulding machine according to one of the preceding claims 1 to 5, characterized in that to manufacture a conical removable-cover vessel body (72) there is inserted into the blow mould (34) in the region of the lower vessel wall a further half shell-shaped blow mould insert (74) which, as seen in cross-section, is constructed to be approximately wedge-shaped, with the broader side of the insert (74) pointing towards the lower surface of the vessel and the narrower pointed side of the insert (74) pointing towards the vessel orifice of the removable-cover vessel body (72).

7. A blow moulding machine according to one of the preceding Claims 1 to 6, characterized in that to change or reduce the mould slide travel a removable spacer piece (78) may be secured between the mould slide (30) and the fixed blow moulded part (40).

8. A process for manufacturing blow moulded hollow bodies with upset flange rings, in particular large-volume vessels, from thermoplastic synthetic material in a blow moulding machine, in which there may be manufactured in a blow mould as the basic mould with a mould slide a first vessel type having a casing flange upset on the upper vessel region, and in which by exchanging an exchangeable ring part set the installed blow mould is changed over such that a completely different second vessel type having a casing flange upset in the vessel body region may be manufactured.

9. A process according to Claim 8, characterized in that there is blown in the blow mould as the first vessel type a closed plugged vessel having at least one plug hole opening in the vessel upper surface and having an upper and/or lower carrying and transport ring and as the second vessel type a removable-cover vessel body having a solid casing flange arranged in the upper vessel region or in the vicinity of the vessel opening as a bearing for the vessel cover or as a counter-bearing for a clamping ring closure.

## Revendications

1. Machine de moulage par soufflage pour la fabrication de fûts soufflés de grande capacité en matière synthétique thermoplastique avec un collet annulaire (58), (68), qui comprend un moule de soufflage (34) composé de deux moitiés déplaçables horizontalement, dans lequel est extrudé une ébauche tubulaire qui est soufflée pour prendre la forme du corps du fût, le collet annulaire (58), (68) étant refoulé simultanément dans le moule de soufflage (34) grâce à un coulisseau, où
- le moule de soufflage (34) constitue le moule de base pour la fabrication d'un premier type de fûts, à savoir de tonneaux à bonde (26), (54) avec un cerceau porteur et de transport (58) périphérique continu prévu dans la zone du fond supérieur (56) du tonneau, dans lequel est ménagée au moins une bonde,
- le moule de soufflage (34) et/ou le coulisseau (30) pour le refoulement du cerceau porteur et de transport (58) à partir de la matière du corps du tonneau est pourvu d'un premier jeu de parties annulaires (42), (44), (46) échangeables présentant le contour du cerceau porteur et de transport (58),
- l'équipement du moule de soufflage (34) et/ou du coulisseau (30) peut être changé rapidement pour passer de la fabrication d'un premier type de fûts, à savoir de tonneaux à bonde (26), (54), à un autre type de fûts, à savoir du corps de tonneaux à couvercle (60), grâce aux jeux échangeables de parties annulaires (42, 44, 46), (50, 44, 52) pouvant être introduites et fixées dans le moule de soufflage (34) en vue d'équiper ledit moule pour le second type de fûts, à savoir le corps de tonneaux à couvercle (60) avec un collet périphérique continu (68) dans la zone de l'ouverture supérieure du tonneau, le second jeu de parties annulaires (50, 44, 52) correspondant au contour du collet périphérique massif (68) sur le corps du tonneau à couvercle (60).

2. Machine de moulage par soufflage selon la revendication 1 *caractérisée en ce que* les jeux de parties annulaires (42, 44, 46), (50, 44, 52) sont échangeables sans démonter le moule de soufflage (34), respectivement le coulisseau (30) de la machine de moulage par soufflage (10).

3. Machine de moulage par soufflage selon les revendications 1 ou 2 *caractérisée en ce que* les moyens de fixation, de préférence des vis (48), destinés à la fixation des jeux de parties annulaires (42, 44, 46), (50, 44, 52) dans le moule de soufflage (34), respectivement le coulisseau (30), sont accessibles et peuvent être manipulés depuis l'extérieur, respectivement depuis le bas.

4. Machine de moulage par soufflage selon les revendications 1, 2 ou 3 *caractérisée en ce que* le jeu de parties annulaires (42, 44, 46) pour le cerceau porteur et de transport (58) de tonneaux à bonde (54), respectivement le jeu de parties annulaires (50, 44, 52) pour le collet (68) du corps de tonneaux à couvercle (60), se compose d'au moins deux parties annulaires continues sur toute la périphérie, où l'une desdites parties annulaires (42), (50) servant de contour est fixée de manière amovible sur la partie fixe (40) du moule tandis que l'autre partie annulaire (46), (52) servant d'anneau de compression est fixée de manière amovible sur le coulisseau (30).

5. Machine de moulage par soufflage selon les revendications 1, 2, 3 ou 4 *caractérisée en ce que* le moule de soufflage (34) comprend comme moule de base un second coulisseau (30') pour le refoulement d'un second cerceau périphérique servant de cerceau de roulage sur le sol, disposé dans la zone de transiton entre la partie inférieure du corps du tonneau et le fond inférieur de celui-ci.

6. Machine de moulage par soufflage selon l'une des revendications 1 à 5 *caracterisée en ce que* en vue de la fabrication de corps (72) de tonneaux à couvercle de forme conique, une pièce en forme de demi-coque (74) est insérée dans le moule de soufflage, ladite pièce insérée présentant une section transversale en forme de coin dont le côté le plus large est orienté vers le fond inférieur du tonneau tandis que son côté plus étroit en pointe est orienté vers l'ouverture du corps (72) dudit tonneau.

7. Machine de moulage par soufflage selon l'une des revendications 1 à 6 *caractérisée en ce que* en vue de modifier, respectivement diminuer, la course du coulisseau, un écarteur (78) peut être fixé entre le coulisseau (30) et la partie fixe (40) du moule.

8. Procédé de fabrication de corps creux soufflés avec des collets annulaires refoulés, en particulier de fûts de grande capacité, en matière synthétique thermoplastique, à l'aide d'une machine de moulage par soufflage qui comporte un moule de soufflage qui, servant de moule de base avec un coulisseau, permet de fabriquer un premier type de fûts comportant un collet refoulé prévu dans la zone supérieure du corps du fût, et, dont l'équipement peut être modifié par l'insertion d'un autre jeu de parties annulaires de façon à pourvoir fabriquer un autre type de corps de fûts comportant un collet refoulé.

9. Procédé selon la revendication 8 *caractérisé par* la fabrication dans le moule de soufflage d'un premier type de fûts, à savoir de tonneaux à bonde, dont le fond supérieur est pourvu d'au moins une bonde et qui comporte un cerceau porteur et de transport supérieur et/ou inférieur et par la fabrication d'un second type de fûts, à savoir de tonneaux à couvercle, dont le corps comporte dans la zone supérieure, respectivement à proximité de l'ouverture du tonneau, un collet massif servant d'appui au couvercle, respectivement de butée à un anneau tendeur de fermeture.
